# EUROPÄISCHE PATENTSCHRIFT

(11) **EP 2 855 910 B1**
(45) Veröffentlichungstag und Bekanntmachung des Hinweises auf die Patenterteilung: **20.04.2016**
(21) Anmeldenummer: 13722728.6
(22) Anmeldetag: 07.05.2013
(51) Int. Cl.: F02M 26/00, F02D 29/04, F02B 37/18, F16K 27/02

(54) **REGELVENTIL ZUM ANBAU AN EINEN VERBRENNUNGSMOTOR**
CONTROL VALVE FOR MOUNTING ON AN INTERNAL COMBUSTION ENGINE
VANNE DE CONTROLE POUR MONTAGE À UN MOTEUR À COMBUSTION INTERNE

(30) Priorität: 29.05.2012 DE 102012104612
(43) Veröffentlichungstag der Anmeldung: 08.04.2015
(73) Patentinhaber: Pierburg GmbH, 41460 Neuss (DE)
(72) Erfinder: KÜHNEL, Hans-Ulrich, 41239 Mönchengladbach (DE); SIEBRANDT, Sabine, 41748 Viersen (DE)
(74) Vertreter: Patentanwälte ter Smitten Eberlein Rütten Partnerschaftsgesellschaft
(86) Internationale Anmeldenummer: PCT/EP2013/059482
(87) Internationale Veröffentlichungsnummer: WO 2013/178442

(56) Entgegenhaltungen:
- EP-A1- 2 447 581
- WO-A2-2008/115773
- DE-A1- 4 040 760
- DE-T5-112007 003 319
- DE-U1- 8 714 507

## Beschreibung

Die Erfindung betrifft ein Regelventil zum Anbau an einen Verbrennungsmotor mit einem Gehäuse mit einem Einlass und einem Auslass, einem Regelkörper, der einen Durchlass zwischen dem Einlass und dem Auslass beherrscht, einem Betätigungsglied, an welchem der Regelkörper befestigt ist, einem Aktor, über den das Betätigungsglied in Bewegung versetzbar ist, und welcher am Gehäuse befestigt ist und einem Hitzeschild, welches zwischen dem Aktor und dem Verbrennungsmotor angeordnet ist.

Derartige Regelventile werden beispielsweise als Abgasrückführventile Abgasklappen oder Waste-Gateventile verwendet. Bei Nutzung eines elektromotorisch betriebenen Aktors, werden dessen Bauteile bei Anbau an den Verbrennungsmotor durch Wärmeübergang aus dem Abgas oder Wärmestrahlung von den umliegenden Motorelementen hoch belastet, was gegebenenfalls zum Ausfall der Elektronikbauteile oder der Wicklungen des Aktors führen kann.

Um dies zu vermeiden sind verschiedene Kühlsysteme bekannt geworden, mit denen Kühlmittel in die Gehäuse der Ventile geleitet werden kann, wodurch ein Wärmeübergang insbesondere aus dem heißen Abgas und somit über die Gehäuse zum Aktor verringert wird. Auch werden Abschirmbleche zwischen den Abgas führenden Teilen und dem Aktor angeordnet. Diese verringern jedoch nicht die thermischen Probleme, welche entstehen, wenn das Regelventil zusätzlich direkt im Wärme belasteten Bereich des Verbrennungsmotors angeordnet wird, so dass die Wärmestrahlung benachbarter Bauteile das Regelventil zusätzlich thermisch belastet.

Aus diesem Grund wurde in der DE 11 2007 003 319 T5 ein Abschirmblech vorgeschlagen, welches an einem Lagerbock befestigt wird, der zum Anbau an einem Element des Verbrennungsmotors dient und an dem neben dem Abschirmblech auch ein Regelventil derart befestigt wird, dass das Blech Wärmestrahlung des Motors vom Aktor abschirmt und zwischen dem Aktor des Ventils und dem Lagerbock angeordnet ist.

Dieser Hitzeschild wird jedoch einzeln in mehreren Fertigungsschritten hergestellt und muss anschließend montiert werden. Im Folgenden muss der Hitzeschild mit dem Ventil und dem Lagerbock noch am Verbrennungsmotor befestigt werden. Entsprechend gestaltet sich die Herstellung und Montage des Ventils mit dem Hitzeschild sehr aufwendig.

Einen ähnlichen Hitzeschild zeigt die WO 2008/115773 A2.

Es stellt sich daher die Aufgabe, ein Regelventil zum Anbau an einen Verbrennungsmotor zu schaffen, welches mit möglichst wenigen Fertigungs- und Montageschritten in unmittelbarer Nähe zu Wärme abstrahlenden Teilen des Verbrennungsmotors am Abgaskanal befestigt werden kann.

Diese Aufgabe wird durch ein Regeventil mit den Merkmalen des Hauptanspruchs gelöst.

Dadurch, dass der Hitzeschild einstückig mit dem Gehäuse des Regelventils ausgebildet ist, entfällt sowohl die separate Herstellung des Hitzeschildes als auch dessen zusätzliche Montage, wobei gleichzeitig Montagefehler durch falschen Einbau ausgeschlossen werden. Die Abschirmung durch diesen direkt mit gegossenen Hitzeschild ist gegenüber einem Hitzeschild aus Blech besser.

Entsprechend ist das Gehäuse vorzugsweise ein Leichtmetallgussteil, was einerseits geringe Gewichte sicherstellt und andererseits die hohe Abschirmung gewährleistet.

In einer bevorzugten erfindungsgemäßen Ausführung ist zwischen dem Aktor und dem Hitzeschild ein Getriebe angeordnet, über welches der Aktor mit dem Betätigungsglied gekoppelt ist. So wird auch eine folgende indirekte Strahlung vom Hitzeschild zum Aktor vermieden. Des Weiteren bleibt die Montage des Aktors am Gehäuse einfach, da dieser von der freien Seite eingesetzt werden kann.

Um eine vollständige Abschirmung aller hitzeempfindlichen elektronischen Bauteile und Spulen zu erhalten, ist die Projektionsfläche des Aktors ohne Steckverbinder in Richtung des Hitzeschildes kleiner als der Hitzeschild.

Vorzugsweise erstreckt sich der Hitzeschild im Wesentlichen halbbogenförmig um das Getriebe. Auf diese Weise wird auch eine seitliche Wärmestrahlung zumindest teilweise durch den Hitzeschild abgeschirmt.

In einer besonders vorteilhaften Ausbildung ist das Regelventil ein Steckventil, dessen Gehäuse in einen Regelkanal einsteckbar ist und über einen Flansch am Regelkanal befestigbar ist. So kann das Regelventil mit dem Aktor und dem Hitzeschild komplett über einige Schrauben am Regelkanal befestigt werden, so dass keine weiteren Anschlüsse hergestellt werden müssen.

In einer bevorzugten Ausführung erstreckt sich der Hitzeschild von dem Flansch aus senkrecht, mittels dessen das Regelventil am Regelkanal befestigt ist. Dieser Aufbau ist einfach im Druckgussverfahren zu realisieren, da senkrecht zueinander angeordnete Entformungsebenen gebildet werden.

In einer weiterführenden Ausführungsform ist in dem Flansch eine Öffnung ausgebildet, durch die eine als Betätigungsglied wirkende Ventilstange sich in das Getriebe erstreckt. Entsprechend kann ein Hubventil mit einer sehr genauen Regelung eingesetzt werden.

In einer wiederum weiterführenden vorteilhaften Ausgestaltung erstreckt sich vom Flansch parallel zum Hitzeschild eine Montageplatte, welche das Getriebe zumindest teilweise aufnimmt und an deren zum Hitzeschild abgewandten Seite der Aktor befestigt ist. Hierdurch kann der Aktor ebenfalls durch eine einfache Flanschverbindung am Gehäuse befestigt werden. Das Getriebe durchdringt die Montageplatte und kann an der gegenüberliegenden Seite mit der Ventilstange verbunden werden. Der notwendige Montageaufwand ist entsprechend gering.

Um das Getriebe vor einem Eindringen von Flüssigkeit oder Schmutz zu schützen, ist an der zum Hitzeschild gewandten Seite der Montageplatte eine Abdeckung des Getriebes befestigt. Dieses kann insbesondere durch eine einfache Clipsverbindung an der Montageplatte befestigt von der zum Hitzeschild weisenden Seite befestigt werden.

In bevorzugter Verwendung ist das Regelventil ein Abgasrückführventil und der Aktor weist einen Elektromotor auf. Diese sind besonders vorteilhaft als Steckventile auszuführen und können derart im Bereich eines Abgaswärmetauschers angeordnet werden, dass auch der Wärmeübergang vom Abgaskanal zum Aktor verringert wird. Des Weiteren ist es möglich, dass Ventil so am Wärmetauscher anzuordnen, dass die vom Hitzeschild aufgenommene Wärme über das Kühlmittel abgeführt werden kann.

Es wird somit ein Regelventil zum Anbau an einen Verbrennungsmotor geschaffen, welches in wenigen Fertigungsschritten herstellbar ist und nicht zuletzt wegen einer geringen Anzahl an Einzelbauteilen leicht und kostengünstig montierbar ist. Dabei wird eine Überlastung der elektronischen Bauteile durch Abschirmung des Aktors verhindert. Dadurch wird es möglich, das Ventil in unmittelbarer Nähe zu Wärme abstrahlenden Bauteilen des Verbrennungsmotors anzuordnen, ohne dass hierdurch die Lebensdauer des Ventils beeinträchtigt würde oder ein Funktionsausfall zu befürchten wäre.

Ein Ausführungsbeispiel eines erfindungsgemäßen als Abgasrückführventil einzusetzenden Regelventils ist in den Figuren dargestellt und wird nachfolgend beschrieben.
Figur 1 zeigt ein Gehäuse eines erfindungsgemäßen Regelventils in perspektivischer Darstellung,
Figur 2 zeigt ein erfindungsgemäßes Regelventil mit dem Gehäuse aus Figur 1 in perspektivischer Darstellung.

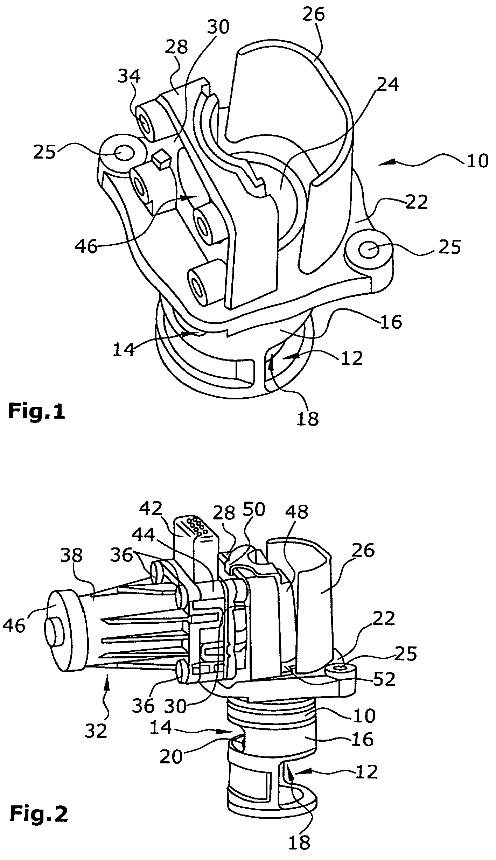

Das erfindungsgemäße Regelventil weist ein in der Figur 1 dargestelltes Gehäuse 10 auf, welches aus einem Leichtmetall im Druckgussverfahren hergestellt ist. Das Regelventil ist als Steckventil ausgebildet, so dass ein Einlass 12 und ein Auslass 14 übereinanderliegend an einem zylindrischen Grundkörper 16 ausgebildet sind. Zwischen den beiden den Einlass 12 und den Auslass 14 bildenden Fenster ist an diesem Grundkörper 16 ein Durchlass 18 ausgebildet, der von einem Ventilsitz 20 umgeben ist, auf den ein als Regelkörper dienender, in den Figuren nicht sichtbarer Ventilschließkörper im den Durchlass 18 verschließenden Zustand absetzbar ist, welcher im regelnden Zustand vom Ventilsitz 20 abhebbar ist.

Der Regelkörper ist an einem ebenfalls nicht sichtbaren Betätigungsglied in Form einer Ventilstange befestigt, welche sich entlang der Mittelachse des Grundkörpers 16 erstreckt und durch einen Flansch 22 ragt, der den Grundkörper 16 begrenzt und eine mittlere Öffnung 24 zur Durchführung der Ventilstange aufweist. Am Flansch 22 sind zwei Schraubenlöcher 25 ausgebildet, über die das Gehäuse 10 an einem Abgaskanal nach dem Einstecken in diesen befestigt werden kann.

Von der Oberfläche des Flansches 22 aus, erstreckt sich in zum Grundkörper 16 entgegengesetzter Richtung ein Hitzeschild 26 sowie eine Montageplatte 28, welche eine Flanschfläche 30 aufweist, die in zum Hitzeschild 26 entgegengesetzter Richtung weist. An dieser Flanschfläche 30 wird ein elektromotorischer Aktor 32 im vorliegenden Ausführungsbeispiel über vier in entsprechende Schraubenlöcher 34 gesteckte Schrauben 36 befestigt, wie dies in Figur 2 zu erkennen ist. Der Elektromotor ist in einem Außengehäuse 38 mit einer Endkappe 40 angeordnet, wobei ein Stecker 42 zur Stromversorgung des Elektromotors aus einem zweiten Gehäuseteil 44 nach außen ragt, welches über eine Clipsverbindung mit dem Außengehäuse 38 verbunden ist.

Die Montageplatte 28 weist eine große zentrale Öffnung 46 auf, durch die ein nicht dargestelltes Getriebe zur Ventilstange also in den Bereich zwischen der Montageplatte 28 und dem Hitzeschild 26 ragt und in bekannter Weise dort beispielsweise über einen Exzenter mit der Ventilstange verbunden wird, so dass die rotatorische Bewegung des Elektromotors in eine translatorische Bewegung der Ventilstange und somit des Ventilschließkörpers umgewandelt wird. Als Getriebe kann insbesondere ein Planetengetriebe verwendet werden.

Der Raum, in den das Getriebe aus der Öffnung 46 ragt, wird durch eine Abdeckung 48 verschlossen, welche durch Formschluss an der Montageplatte 28 befestigt ist. Hierzu weist die Abdeckung 48 eine erste Nase 50 auf, die hinter die Montageplatte 28 ragt und eine zweite Nase 52, die zwischen die Montageplatte 28 und den Hitzeschild geklemmt ist.

Der Hitzeschild 26 erstreckt sich im Wesentlichen parallel zur Montageplatte 28 und weist eine Bogenform auf, so dass die Öffnung 24 etwa über ihren halben Umfang vom Hitzeschild 26 umgeben ist. Die Höhe des Hitzeschildes 26 entspricht im Wesentlichen der Höhe der Montageplatte 28, so dass der Aktor 32 mit Ausnahme des Steckers 42 vollständig gegen eine Wärmestrahlung von der zur Montageplatte 28 entgegengesetzten Seite des Hitzeschildes 26 durch das Hitzeschild 26 abgeschirmt ist.

Das Regelventil, welches vorzugsweise als Abgasrückführventil verwendet wird, kann nun derart an einen Verbrennungsmotor angebaut werden, dass der Hitzeschild 26 in Richtung des Verbrennungsmotors weist. Die am Verbrennungsmotor entstehende Wärmestrahlung wird durch den Hitzeschild 26 vom Aktor 32 ferngehalten, so dass dessen thermische Belastung auch bei direktem Anbau an den Verbrennungsmotor deutlich sinkt, wodurch eine Überlastung der elektronischen Bauteile des Aktors 32 zuverlässig vermieden wird. Wie bereits erwähnt, ist dieser Hitzeschild 26 einstückig mit dem Gehäuse 10 des Regelventils hergestellt, so dass eine zusätzliche Herstellung und Montage des Hitzeschildes entfallen. Der Elektromotor kann mit dem Getriebe vormontiert, durch die Öffnung 30 geschoben werden und anschließend mittels der Schrauben 36 auf einfache Weise montiert werden. Anschließend muss lediglich die Kopplung zum Betätigungsglied vollzogen werden und die Abdeckung 48 durch Stülpen der Nase 50 hinter die Montageplatte 28 des Getriebes befestigt werden. So ergibt sich ein Regelventil, welches mit sehr geringem Montage- und Herstellaufwand und somit kostengünstig hergestellt werden kann.

Es sollte deutlich sein, dass verschiedene Änderungen innerhalb des Schutzbereiches des Hauptanspruchs möglich sind. So ist eine vergleichbare Ausführung für andere Anwendungen wie Waste-Gateventile oder Abgasklappen ebenso denkbar wie die Verwendung von Klappenventilen zur Steuerung des Abgasstromes. Dabei muss lediglich der mit dem Gehäuse einstückig ausgeführte Hitzeschild möglichst vollständig den Aktor abdeckend zwischen dem Wärme abstrahlenden Teil des Verbrennungsmotors und dem Aktor platziert werden. Eine zusätzliche Verbesserung könnte auch dadurch erreicht werden, dass das Gehäuse einen Kühlkanal aufweist, über den das Gehäuse gekühlt wird, so dass die vom Hitzeschild aufgenommene Wärme zusätzlich zur Abführung über die umgebende Luft auch über das Kühlmittel weggeführt werden kann. Bei einer derartigen Ausführung ergäbe sich der zusätzliche Vorteil eines verbesserten Wärmeübergangs zum Flansch, wodurch die Wärmeabführung im Vergleich zu den einzeln hergestellten Hitzeschilden noch einmal verbessert würde.

## Patentansprüche

1. Regelventil zum Anbau an einen Verbrennungsmotor mit einem Gehäuse (10), mit einem Einlass (12) und einem Auslass (14),
einem Regelkörper, der einen Durchlass (18) zwischen dem Einlass (12) und dem Auslass (14) beherrscht,
einem Betätigungsglied, an welchem der Regelkörper befestigt ist, einem Aktor (32), über den das Betätigungsglied in Bewegung versetzbar ist, und welcher am Gehäuse (10) befestigt ist und einem Hitzeschild (26), welches zwischen dem Aktor (32) und dem Verbrennungsmotor angeordnet ist,
**dadurch gekennzeichnet, dass**
der Hitzeschild (26) einstückig mit dem Gehäuse (10) des Regelventils ausgebildet ist.

2. Regelventil zum Anbau an einen Verbrennungsmotor nach Anspruch 1,
**dadurch gekennzeichnet, dass**
das Gehäuse (10) ein Leichtmetallgussteil ist.

3. Regelventil zum Anbau an einen Verbrennungsmotor nach einem der Ansprüche 1 oder 2,
**dadurch gekennzeichnet, dass**
zwischen dem Aktor (32) und dem Hitzeschild (26) ein Getriebe angeordnet ist, über welches der Aktor (32) mit dem Betätigungsglied gekoppelt ist.

4. Regelventil zum Anbau an einen Verbrennungsmotor nach einem der vorhergehenden Ansprüche,
**dadurch gekennzeichnet, dass**
die Projektionsfläche des Aktors (32) ohne Stecker (42) in Richtung des Hitzeschildes (26) kleiner ist als das Hitzeschild (26).

5. Regelventil zum Anbau an einen Verbrennungsmotor nach einem der vorhergehenden Ansprüche,
**dadurch gekennzeichnet, dass**
sich der Hitzeschild (26) im Wesentlichen halbbogenförmig um das Getriebe erstreckt.

6. Regelventil zum Anbau an einen Verbrennungsmotor nach einem der vorhergehenden Ansprüche,
**dadurch gekennzeichnet, dass**
das Regelventil ein Steckventil ist, dessen Gehäuse (10) in einen Regelkanal einsteckbar ist und über einen Flansch (22) am Regelkanal befestigbar ist.

7. Regelventil zum Anbau an einen Verbrennungsmotor nach Anspruch 6,
**dadurch gekennzeichnet, dass**
sich der Hitzeschild (26) von dem Flansch (22) aus senkrecht erstreckt, mittels dessen das Regelventil am Regelkanal befestigt ist.

8. Regelventil zum Anbau an einen Verbrennungsmotor nach einem der Ansprüche 6 oder 7,
**dadurch gekennzeichnet, dass**
in dem Flansch (22) eine Öffnung (24) ausgebildet ist, durch die eine als Betätigungsglied wirkende Ventilstange sich in das Getriebe erstreckt.

9. Regelventil zum Anbau an einen Verbrennungsmotor nach einem der Ansprüche 6 bis 8,
**dadurch gekennzeichnet, dass**
sich vom Flansch (22) parallel zum Hitzeschild (26) eine Montageplatte (28) erstreckt, welche das Getriebe zumindest teilweise aufnimmt und an deren zum Hitzeschild (26) abgewandten Seite der Aktor (32) befestigt ist.

10. Regelventil zum Anbau an einen Verbrennungsmotor nach Anspruch 9,
**dadurch gekennzeichnet, dass**
an der zum Hitzeschild (26) gewandten Seite der Montageplatte (28) eine Abdeckung (48) des Getriebes befestigt ist.

11. Regelventil zum Anbau an einen Verbrennungsmotor nach einem der vorhergehenden Ansprüche,
**dadurch gekennzeichnet, dass**
das Regelventil ein Abgasrückführventil ist und der Aktor (32) einen Elektromotor aufweist.

## Claims

1. A control valve for installing on an internal combustion engine, comprising
a housing (10) with an inlet (12) and an outlet (14),
a control body which controls a passage (18) between the inlet (12) and the outlet (14),
an actuating element to which the control body is fixed,
an actuator (32) via which the actuating element can be moved and which is fixed to the housing (10), and
a heat shield (26) which is arranged between the actuator (32) and the internal combustion engine,
**characterized in that**
the heat shield (26) is integrally formed with the housing (10) of the control valve.

2. The control valve for installing on an internal combustion engine of claim 1, **characterized in that** the housing (10) is a light metal casting.

3. The control valve for installing on an internal combustion engine of one of claims 1 or 2, **characterized in that** a gearing is arranged between the actuator (32) and the heat shield (26), via which the actuator (32) is coupled with the actuating element.

4. The control valve for installing on an internal combustion engine of one of the preceding claims, **characterized in that** the projected area of the actuator (32), without the plug (42), is smaller in the direction of the heat shield (26), than the heat shield (26).

5. The control valve for installing on an internal combustion engine of one of the preceding claims, **characterized in that** the heat shield (26) extends around the gearing in a substantially semi-circular shape.

6. The control valve for installing on an internal combustion engine of one of the preceding claims, **characterized in that** the control valve is a plug-in valve whose housing (10) is adapted to be plugged into a control channel and to be fastened to the control channel via a flange (22).

7. The control valve for installing on an internal combustion engine of claim 6, **characterized in that** the heat shield (26) extends vertically from the flange (22) by which the control valve is fastened to the control channel.

8. The control valve for installing on an internal combustion engine of one of claims 6 or 7, **characterized in that** the flange (22) is formed with an opening (24) through which a valve rod extends into the gearing, the rod acting as an actuating element.

9. The control valve for installing on an internal combustion engine of one of claims 6 to 8, **characterized in that** a mounting plate (28) extends from the flange (22) in a direction parallel to the heat shield (26), which mounting plate accommodates the gearing at least partly and to which the actuator (32) is fastened o the side averted from the heat shield (26).

10. The control valve for installing on an internal combustion engine of claim 9, **characterized in that** a cover (48) of the gearing is fastened on the side of the mounting plate (28) facing to the heat shield (26).

11. The control valve for installing on an internal combustion engine of one of the preceding claims, **characterized in that** the control valve is an exhaust gas recirculation valve and the actuator (32) comprises an electric motor.

## Revendications

1. Vanne de contrôle pour montage à un moteur à combustion interne, avec
un carter (10) ayant une entrée (12) et une sortie (14),
un corps de contrôle contrôlant un passage (18) entre l'entrée et la sortie (14),
un élément d'actionnement sur lequel est monté ledit corps de contrôle,
un actuateur (32) par lequel ledit élément d'actionnement peut être déplacé, et qui est fixé sur le carter (10), et
un écran thermique (26) disposé entre l'actuateur (32) et le moteur à combustion interne,
**caractérisée en ce que**
ledit écran thermique (26) est formé en une pièce avec le carter (10) de la vanne de contrôle.

2. Vanne de contrôle pour montage à un moteur à combustion interne, selon la revendication 1, **caractérisée en ce que** le carter (10) est un carter en métal léger.

3. Vanne de contrôle pour montage à un moteur à combustion interne, selon la revendication 1 ou 2, **caractérisée en ce qu'**une transmission est disposée entre l'actuateur (32) et l'écran thermique (26), la transmission reliant l'actuateur (32) à l'élément d'actionnement.

4. Vanne de contrôle pour montage à un moteur à combustion interne, selon l'une quelconque des revendications précédentes, **caractérisée en ce que** la surface de projection de l'actuateur (32), sans fiche (42), dans la direction de l'écran thermique (26) est inférieure à l'écran thermique (26).

5. Vanne de contrôle pour montage à un moteur à combustion interne, selon l'une quelconque des revendications précédentes, **caractérisée en ce que** l'écran thermique s'étend sensiblement en forme d'un demi-cercle autour de la transmission.

6. Vanne de contrôle pour montage à un moteur à combustion interne, selon l'une quelconque des revendications précédentes, **caractérisée en ce que** la vanne de contrôle est une vanne à opercule dont le carter (10) peut être inséré dans un conduit de contrôle et peut être fixée sur ledit conduit de contrôle par une bride (22).

7. Vanne de contrôle pour montage à un moteur à combustion interne, selon la revendication 6, **caractérisée en ce que** l'écran thermique (26) s'étend perpendiculairement à partir de la bride (22) par laquelle la vanne de contrôle est fixée sur le conduit de contrôle.

8. Vanne de contrôle pour montage à un moteur à combustion interne, selon la revendication 6 ou 7, **caractérisée en ce qu'**une ouverture (24) est formée dans la bride (22), une tige de vanne, agissant comme élément d'actionnement, s'étendant dans la transmission à travers l'ouverture.

9. Vanne de contrôle pour montage à un moteur à combustion interne, selon l'une quelconque des revendications 6 à 8, **caractérisée en ce qu'**une plaque de montage (28) s'étend de la bride (22) en parallèle à l'écran thermique (26), la transmission étant reçue au moins partiellement dans ladite plaque et l'actuateur (32) étant monté sur la côté de la plaque opposée à l'écran thermique (26).

10. Vanne de contrôle pour montage à un moteur à combustion interne, selon la revendication 9, **caractérisée en ce qu'**un couvercle (48) pour la transmission est monté sur la côté de la plaque de montage (28) orientée vers l'écran thermique (26).

11. Vanne de contrôle pour montage à un moteur à combustion interne, selon l'une quelconque des revendications précédentes, **caractérisée en ce que** ladite vanne de contrôle est une vanne de recirculation des gaz d'échappement et l'actuateur (32) comprend un électromoteur.
